# FASCICULE DE BREVET EUROPEEN

(11) **EP 0 942 675 B1**
(45) Date de publication et mention de la délivrance du brevet: **15.11.2000**
(21) Numéro de dépôt: 96941697.3
(22) Date de dépôt: 04.12.1996
(51) Int. Cl.: A47J 45/07

(54) **COUVERCLE A BOUTON DE PREHENSION**
DECKEL MIT GRIFF-KNOPF
COVER WITH PREHENSILE BUTTON

(43) Date de publication de la demande: 22.09.1999
(73) Titulaire: SEB S.A., 69130 Ecully (FR)
(72) Inventeur: RAOULT, Philippe, F-74370 Pringy (FR)
(74) Mandataire: Keib, Gérard
(86) Numéro de dépôt international: FR9601934
(87) Numéro de publication internationale: WO9824351

(56) Documents cités:
- AT-B- 387 708
- US-A- 1 759 771
- US-A- 3 278 074

## Description

La présente invention concerne un couvercle et son bouton de préhension, tel qu'un couvercle pour ustensiles de cuisson.

Il existe actuellement des couvercles avec un bouton de manipulation, comportant ou non un orifice pour l'échappement de la vapeur, maintenu solidaire du couvercle par une vis.

Ces boutons de préhension présentent l'inconvénient d'augmenter l'encombrement des couvercles et de gêner leur empilement.

De plus, le vissage du bouton est généralement réalisé au centre du bouton de préhension, l'orifice de sortie de la vapeur étant prévu sur la périphérie. Il est alors nécessaire d'indexer en rotation le bouton de manière à faire correspondre, lors du vissage sur le couvercle, l'orifice du bouton et le trou d'échappement de la vapeur existant dans le couvercle.

On connaît par le document US-A-3 278 074 un couvercle comprenant un bouton de préhension, des moyens de liaison étant adaptés à fixer le bouton sur le couvercle. Ces moyens de liaison comprennent deux ergots associés à deux encoches qui présentent chacune une portion de passage d'un ergot dans l'encoche et une portion de maintien dudit ergot en prise dans l'encoche, chaque ergot étant mobile entre la portion de passage et la portion de maintien de l'encoche associée lorsque le bouton et le couvercle sont déplacés l'un par rapport à l'autre.

Les encoches sont formées dans une saillie annulaire en relief sur la surface du couvercle.

Si ces moyens d'attache rapide permettent de désolidariser et de remettre en place le bouton de préhension sur le couvercle aussi souvent que le souhaite l'utilisateur, en revanche le couvercle n'est pas destiné à être empilé avec d'autres couvercles analogues. Il s'agit en effet d'un couvercle suffisamment profond pour pouvoir, une fois retourné, faire office d'ustensile de cuisson après que l'on ait enlevé le bouton de préhension.

Le but de la présente invention est de s'affranchir des contraintes énoncées ci-dessus et de proposer un couvercle et son bouton de préhension de montage et d'utilisation très simplifiés.

Le couvercle visé par l'invention comprend un bouton de préhension, des moyens de liaison adaptés à fixer le bouton sur le couvercle comprenant au moins un ergot et une encoche ayant une portion de passage de l'ergot dans l'encoche et une portion de maintien de l'ergot en prise dans l'encoche, l'ergot étant mobile entre la portion de passage et la portion de maintien de l'encoche lorsque le bouton et le couvercle sont déplacés l'un par rapport à l'autre.

Conformément à l'invention, le couvercle comprend une partie en creux abritant les moyens de liaison solidaires du couvercle, le bouton ayant une portion de forme sensiblement complémentaire de ladite partie en creux et étant adapté à être déplacé sur cette partie en creux entre la portion de passage et la portion de maintien de l'encoche.

Ainsi, par simple déplacement relatif du bouton et du couvercle, on peut monter ou démonter l'ensemble. On obtient ainsi un bouton de préhension amovible présentant de nombreux avantages : simplification du nettoyage du couvercle, gain de place pour le rangement ou le transport, notamment grâce à l'empilement des couvercles.

De plus, les formes complémentaires du couvercle et du bouton permettent de guider le bouton lors de sa mise en place sur le couvercle.

L'introduction et le blocage de l'ergot dans l'encoche sont ainsi plus faciles.

Le couvercle et le bouton forment également un ensemble modulaire, un seul bouton de préhension pouvant être utilisé avec différents couvercles, quelle que soit la matière ou la forme de ces couvercles.

De préférence, l'ergot est mobile entre la portion de passage et la portion de maintien de l'encoche, lorsque le bouton de préhension est déplacé par rotation autour d'un axe central du bouton.

Ce montage par rotation du bouton sur le couvercle, du type à baïonnette, permet d'obtenir une fixation, bien qu'aisément démontable, très fiable lors de la manipulation du couvercle par l'utilisateur au moyen du bouton de préhension.

Selon un autre aspect de l'invention, un bouton de préhension pour couvercle est caractérisé en ce qu'il comporte au moins un ergot adapté à venir en prise dans une encoche du couvercle.

D'autres particularités et avantages de l'invention apparaîtront encore dans la description ci-après.

Aux dessins annexés, donnés à titre d'exemples non limitatifs :
- la figure 1A est une vue en coupe d'un couvercle à bouton de préhension conforme à une première réalisation de l'invention ;
- la figure 1B est une vue de dessous du bouton de préhension de la figure 1A ;
- la figure 1C est une vue de dessus du couvercle de la figure 1A ;
- la figure 2A est une vue en coupe, avec une portion en vue de face, d'un couvercle à bouton de préhension conforme à une seconde réalisation de l'invention ;
- la figure 2B est une vue de dessous du bouton de préhension de la figure 2A ;
- la figure 2C est une vue de dessous du couvercle de la figure 2A ; et
- la figure 3 est une vue en perspective d'un élément illustrant une variante de la réalisation de la figure 2A.

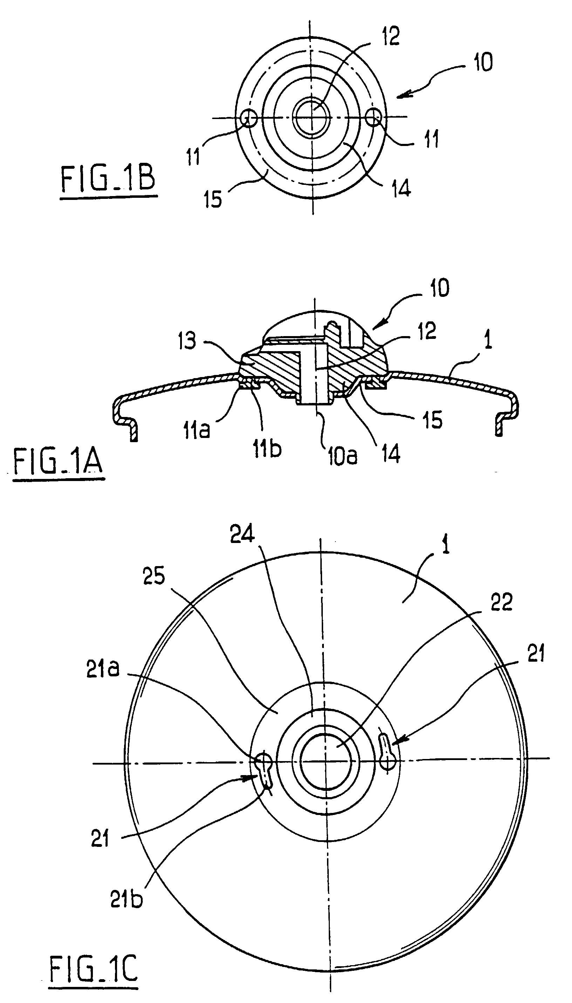

Une première réalisation de l'invention va tout d'abord être décrite en référence aux figures 1A, 1B et 1C.

Conformément à l'invention, un couvercle 1 comprend un bouton de préhension 10 fixé de manière amovible grâce à des moyens de liaison comprenant au moins un ergot 11 et une encoche 21 dans laquelle l'ergot vient en prise.

Comme illustré à la figure 1C, l'encoche 21 a une portion de passage 21a adaptée au passage et à l'introduction de l'ergot 11 et une portion de maintien 21b de l'ergot 11 en prise dans l'encoche 21.

L'ergot 11 comprend une extrémité élargie 11a pouvant passer par l'orifice 21a de l'encoche et un corps 11b, de section plus faible que l'extrémité 11a, qui peut se déplacer dans la portion de maintien 21b de l'encoche, l'extrémité élargie 11a de l'ergot ne pouvant pas traverser la portion de maintien 21b de l'encoche, assurant ainsi la fixation du bouton de préhension sur le couvercle.

Dans cet exemple, les moyens de fixations comprenant deux ergots 11 identiques et deux encoches 21 correspondantes.

La fixation est réalisée par rotation relative du bouton 10 par rapport au couvercle 1, les encoches 21 étant disposées sur un même cercle centré sur le centre du couvercle 1.

Ainsi, lorsque le bouton de préhension 10 est déplacé en rotation autour de son axe central 10a, les ergots 11 viennent en prise avec les encoches 21 et le bouton de préhension est ainsi positionné au centre du couvercle, ce qui permet de mieux répartir le poids du couvercle.

Le couvercle 1 comprend une partie en creux 24, le bouton 10 ayant une portion 14 de forme sensiblement complémentaire à cette partie en creux 24 et étant adapté à être déplacé sur cette partie en creux 24 entre la portion de passage 21a et la portion de maintien 21b de l'encoche 21.

La partie en creux 24 est emboutie sur la surface supérieure du couvercle 1 et est de forme tronconique, le bouton 10 ayant une saillie tronconique 14 de forme complémentaire à la partie en creux 24.

Le couvercle 1 comporte en outre un épaulement 25 s'étendant entre la partie en creux tronconique 24 et le reste du couvercle 1, et le bouton de préhension 10 comporte une partie plane 15 autour de la portion de forme tronconique complémentaire 14, les moyens de liaison 11, 21 étant solidaires de la portion annulaire plane 15 et de l'épaulement 25.

Les formes tronconiques complémentaires du bouton 10 et du couvercle 1 permettent de guider en rotation le bouton lors de sa mise en place sur le couvercle.

Les ergots sont solidaires du bouton de préhension 10 et sont disposés sur la partie annulaire plane 15.

Les encoches sont ménagées dans le couvercle, sur l'épaulement 25, de sorte que lorsque le bouton de préhension 10 est retiré aucun élément ne fait saillie du couvercle 1.

De préférence, le bouton de préhension 10 comprend en outre un orifice de sortie de la vapeur 12, disposé en son centre et le couvercle 1 comprend une ouverture centrale correspondante 22 pour l'échappement des vapeurs de cuisson.

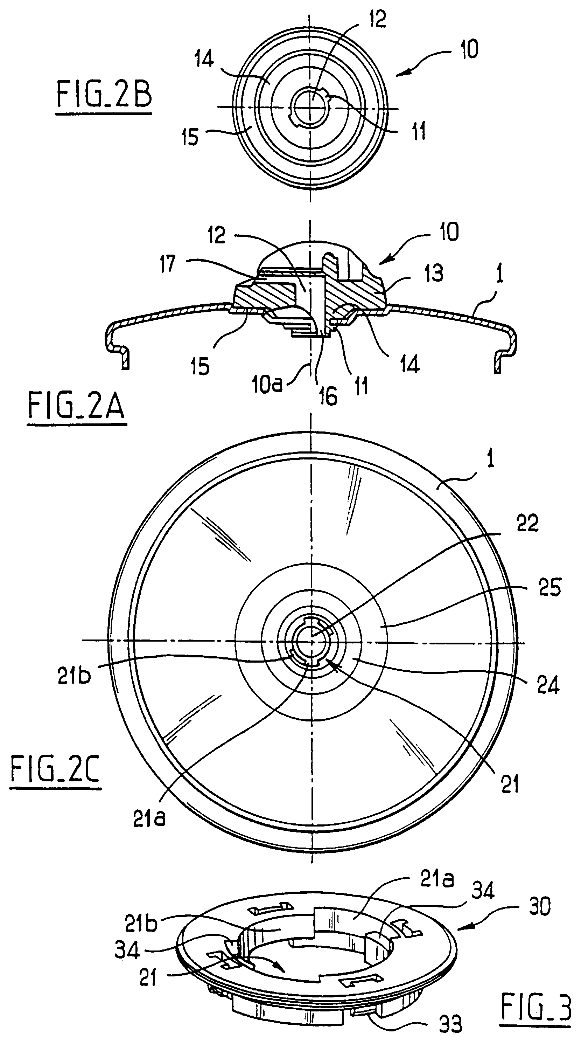

Dans la seconde réalisation illustrée sur les figures 2A, 2B et 2C, les moyens de liaison sont positionnés au centre du bouton de préhension 10 et du couvercle 1. Les éléments identiques à la première réalisation, portant les mêmes références sur les figures, ne seront pas redécrits ci-dessous.

Le bouton 10 comprend des ergots 11 s'étendant radialement par rapport à son axe vertical central 10a.

Ces ergots 11, au nombre de deux, forment ainsi des saillies sur l'extrémité 16 du bouton 11, opposées de préférence l'une à l'autre.

Le couvercle 1 comprend une ouverture formant encoche, sensiblement circulaire, chaque portion de passage 21a adaptée à l'introduction d'un ergot 11 du bouton 10 étant constituée d'un secteur angulaire et chaque portion de maintien 21b étant constitué d'un autre secteur angulaire de rayon inférieur à celui de la portion de passage 21a.

Chaque ergot 11 s'étend à partir de l'axe 10a du bouton 10 sur une longueur égale sensiblement au rayon du secteur angulaire formé par une portion de passage 21a et supérieure au rayon du secteur angulaire formé par une portion de maintien 21b.

Dans cette réalisation, l'encoche comprend deux portions de passage 21a opposées, adjacentes à deux portions de maintien 21b également opposées l'une à l'autre.

Lors de la fixation du bouton 10 sur le couvercle, les ergots 11 traversent les portions de passage 21a et sont ensuite pivotés sous le couvercle 1, au niveau des portions de maintien 21b de l'encoche 21.

Dans cette réalisation, on peut également fixer le bouton de préhension 10 sous le couvercle 1 en introduisant les ergots 11 dans les portions de passage 21a et en faisant ensuite pivoter les ergots 11 sur le couvercle 1, sur les portions de maintien 21b de l'encoche 21.

Le centre de l'encoche 21 du couvercle comprend une ouverture 22 permettant l'échappement des vapeurs de cuisson et correspondant à un conduit 12 ménagé à l'intérieur du bouton 10 et débouchant sous le couvercle à son extrémité 16 et ayant un orifice d'échappement 17 de la vapeur sur le couvercle.

Comme représenté sur la figure 3, l'encoche 21 peut être réalisée dans un insert 30, l'insert 30 étant fixé dans une ouverture 22 du couvercle et ayant une épaisseur supérieure à l'épaisseur du couvercle 1.

Cet insert circulaire 30 peut être fixé sur les bords de l'ouverture central 12 du couvercle, par clipsage au moyen de pattes élastiques 33, par collage ou sertissage mécanique.

Il permet d'éviter la présence de bord coupant au niveau de l'encoche 21 directement percée dans le couvercle et de s'affranchir de la contrainte d'épaisseur du couvercle.

L'insert possède deux encoches 21 telles que décrites précédemment, permettant la fixation du bouton. Il peut être en métal ou en plastique.

L'insert 30 peut également comporter deux autres encoches 34, semblables aux encoches 21 et permettant de fixer le bouton de préhension sous le couvercle 1, notamment lors du rangement de ce dernier.

Chaque encoche 34 peut avoir une portion de passage commune à une portion de passage 21a des encoches 21 et une portion de maintien disposée symétriquement à la portion de maintien 21b par rapport à la portion de passage 21a. Ces portions de maintien des encoches 21 et 34 sont inversées l'une par rapport à l'autre dans l'épaisseur de l'insert 30, c'est-à-dire que la portion de maintien 21b de l'encoche 21 est disposée dans la partie inférieure de l'insert 30 et la portion de maintien de l'encoche 34 est disposée dans la partie supérieure de l'insert 30 lorsque celui-ci est fixé sur le couvercle 1.

Lorsque le bouton 10 est fixé sur le couvercle 1, l'ergot 11 traverse la portion de passage 21a de la partie supérieure vers la partie inférieure de l'insert 30, puis est pivoté sous la portion de maintien 21b. A l'inverse, lorsque le bouton 10 est fixé sous le couvercle, l'ergot 11 traverse la portion de passage 21a de la partie inférieure vers la partie supérieure de l'insert 30, puis est pivoté sur la portion de maintien de l'encoche 34.

Bien entendu, de nombreuses modifications peuvent être apportées aux exemples ci-dessus sans sortir du cadre de l'invention.

Ainsi, la fixation du bouton sur le couvercle pourra être réalisée par translation du bouton sur le couvercle grâce à des encoches droites.

De plus, on peut, par l'adjonction d'un élément anti-retour sur un ergot du bouton, procéder lors du premier verrouillage du bouton sur le couvercle, à une mise en place définitive du bouton après dépassement d'un seuil angulaire prédéterminé.

Le bouton 10 pourrait également avoir la forme d'une poignée ou d'une anse.

## Revendications

1. Couvercle (1) comprenant un bouton de préhension (10), des moyens de liaison (11, 21) adaptés à fixer le bouton (10) sur le couvercle (1) comprenant au moins un ergot (11) et une encoche (21) ayant une portion de passage (21a) de l'ergot (11) dans l'encoche (21) et une portion de maintien (21b) de l'ergot (11) en prise dans l'encoche (21), l'ergot (11) étant mobile entre la portion de passage (21a) et la portion de maintien (21b) de l'encoche lorsque le bouton (10) et le couvercle (1) sont déplacés l'un par rapport à l'autre, caractérisé en ce que le couvercle (1) comprend une partie en creux (24, 25) abritant les moyens de liaison (21) solidaires du couvercle, le bouton (10) ayant une portion (14, 15) de forme sensiblement complémentaire de ladite partie en creux (24) et étant adapté à être déplacé sur cette partie en creux (25) entre la portion de passage (21a) et la portion de maintien (21b) de l'encoche (21).

2. Couvercle conforme à la revendication 1, caractérisé en ce que la partie en creux (24) est emboutie sur la surface supérieure du couvercle 1.

3. Couvercle conforme à l'une des revendications 1 ou 2, caractérisé en ce que l'ergot (11) est mobile entre la portion de passage (21a) et la portion de maintien (21b) de l'encoche, lorsque le bouton de préhension (10) est déplacé en rotation autour d'un axe central (10a) dudit bouton.

4. Couvercle conforme à l'une des revendications 1 à 3, caractérisé en ce que la partie en creux (24) est de forme tronconique, le bouton ayant une saillie tronconique (14) de forme complémentaire à ladite partie en creux (24).

5. Couvercle conforme à l'une des revendications 1 à 4, caractérisé en ce qu'il comporte en outre un épaulement (25) s'étendant entre la partie en creux (24) et le reste du couvercle (1) et en ce que le bouton de préhension (10) comporte une partie annulaire plane (15) autour de ladite portion de forme complémentaire (14), les moyens de liaison (11, 21) étant solidaires de la portion annulaire plane (15) et de l'épaulement (25), de sorte que lorsque le bouton (10) est désolidarisé du couvercle (1), aucun élément ne fait saillie du couvercle (1).

6. Couvercle conforme à l'une des revendications 1 à 5, caractérisé en ce que les moyens de liaison (11, 21) sont positionnés au centre du bouton de préhension (10) et du couvercle (1).

7. Couvercle conforme à l'une des revendications 1 à 6, caractérisé en ce que l'ergot (11) est solidaire du bouton de préhension (10), l'encoche (21) étant solidaire du couvercle (1).

8. Couvercle conforme à la revendication 7, caractérisé en ce que l'encoche (21) est réalisée dans un insert (30), l'insert (30) étant fixé dans une ouverture du couvercle (1) et ayant une épaisseur supérieure à l'épaisseur du couvercle (1).

9. Couvercle conforme à la revendication 8, caractérisé en ce que l'insert (30) comporte une première paire d'encoches (21, 34) comportant des portions de maintien (21b) inversées dans l'épaisseur de l'insert par rapport aux portions de maintien (34) d'une seconde paire d'encoches, les deux paires d'encoches (21, 34) comportant des portions de passage (21a) communes, de manière à permettre la fixation du bouton (10) sur le couvercle (1) ou sous celui-ci.

10. Bouton de préhension pour couvercle conforme à l'une des revendications 1 à 9, caractérisé en ce qu'il comporte au moins un ergot (11) adapté à venir en prise dans une encoche (21) du couvercle (1).

## Patentansprüche

1. Deckel, der einen Griff-Knopf (10), Befestigungselemente (11, 12) geeignet zum Befestigen des Knopfes (10) auf dem Deckel (1) umfaßt, der zumindest ein Halteelement (11) und eine Ausnehmung (21) umfaßt, die einen Führungsbereich (21a) für das Halteelement (11) in der Ausnehmung (21) und einen Haltebereich (21b) zum Halten des Halteelements (11) in der Ausnehmung (21) aufweist, wobei das Halteelement (11) zwischen dem Führungsbereich (21 a) und dem Haltebereich (21 b) der Ausnehmung bewegbar ist, wenn der Knopf (10) und der Deckel (1) gegeneinander verschoben werden,
**dadurch gekennzeichnet,**
daß der Deckel (1) einen hohlen Bereich (24, 25) umfaßt, der zur Aufnahme von mit dem Deckel verbundenen Befestigungselementen (21) dient, wobei der Knopf (10) einen Bereich (14, 15) mit ungefähr komplementärer Form zum hohlen Bereich (24) aufweist und zum Verschieben über diesen hohlen Bereich (25) zwischen dem Führungsbereich (21a) und dem Haltebereich (21 b) der Ausnehmung (21) geeignet ist.

2. Deckel nach Anspruch 1, dadurch gekennzeichnet, daß der hohle Bereich (24) in die obere Oberfläche des Deckels (1) tiefgezogen ist.

3. Deckel nach einem der Ansprüche 1 oder 2, dadurch gekennzeichnet, daß das Halteelement (11) der Ausnehmung bewegbar ist, wenn der Griff-Knopf (10) durch Drehung um eine zentrale Achse (10a) des Knopfes verschoben wird.

4. Deckel nach einem der Ansprüche 1 bis 3, dadurch gekennzeichnet, daß der hohle Bereich (24) abschnittsweise ausgebildet ist, wobei der Knopf einen abschnittsweisen Vorsprung (14) mit komplementärer Form wie der hohle Bereich (24) aufweist.

5. Deckel nach einem der Ansprüche 1 bis 4, dadurch gekennzeichnet, daß er außerdem einen Vorsprung (25) enthält, der sich zwischen dem hohlen Bereich (24) und dem Rest des Deckels (1) erstreckt, und daß der Griff-Knopf (10) einen ringförmig ebenen Bereich (15) um den komplementär geformten Bereich (14) enthält, Befestigungselemente (11, 21), die ungefähr in der ringförmigen Ebene (15) und dem Vorsprung (25) angeordnet sind, so daß, wenn der Knopf (10) vom Deckel entfernt wird, kein Element einen Vorsprung des Deckels (1) darstellt.

6. Deckel nach einem der Ansprüche 1 bis 5, dadurch gekennzeichnet, daß die Befestigungselemente (11, 21) im Zentrum des Griff-Knopfes (10) und des Deckels (1) angeordnet sind.

7. Deckel nach einem der Ansprüche 1 bis 6, dadurch gekennzeichnet, daß das Halteelement (11) mit dem Griff-Knopf (10) verbunden ist, wobei die Ausnehmung (21) mit dem Deckel (1) verbunden ist.

8. Deckel nach Anspruch 7, dadurch gekennzeichnet, daß die Ausnehmung (21) in einem Einsatz (30) ausgebildet ist, wobei der Einsatz (30) in einer Bohrung des Deckels (1) befestigt ist und er eine größere Dicke als die Dicke des Deckels (1) aufweist.

9. Deckel nach Anspruch 8, dadurch gekennzeichnet, daß der Einsatz (30) ein erstes Paar von Ausnehmungen (21, 34) umfaßt, die invertierte Haltebereiche (21 b) in der Dicke des Einsatzes entgegengesetzt zum Haltebereich (34) eines zweiten Paares von Ausnehmungen (21, 34) umfassen, wobei die zwei Paare von Ausnehmungen (21, 34) gemeinsame Führungsbereiche (21a) in der Weise umfassen, daß eine Befestigung des Knopfes (10) auf dem Deckel (1) oder unter diesem erlaubt ist.

10. Griff-Knopf für einen Deckel nach einem der Ansprüche 1 bis 9, dadurch gekennzeichnet, daß er zumindest ein zur Aufnahme in einer Ausnehmung (21) des Deckels (1) geeignetes Halteelement (11) enthält.

## Claims

1. Lid (1) comprising a knob (10) for holding it, and joining means (11, 21) suitable for fixing the knob (10) to the lid (1) comprising at least one pin (11) and at least one slot (21) having a portion (21a) for insertion of the pin (11) into the slot (21) and a portion (21b) for locking the pin (11) in the slot (21), the pin (11) being moveable between the insertion portion (21a) and the locking portion (21b) of the slot when the knob (10) and the lid (1) are moved relative to each other, characterized in that the lid (1) comprises a recessed part (24, 25) accommodating the joining means (21) when these are attached to the lid, the knob (10) having a portion (14, 15) whose shape is essentially complementary to the said recessed part (24) and which is able to be moved on this recessed part (25) between the insertion portion (21a) and the locking portion (21b) of the slot (21).

2. Lid according to Claim 1, characterized in that the recessed part (24) is dished on the upper surface of the lid (1).

3. Lid according to either of Claims 1 and 2, characterized in that the pin (11) is moveable between the insertion portion (21a) and the locking portion (21b) of the slot, when the knob (10) is rotated about a central axis (10a) of the said knob.

4. Lid according to one of Claims 1 to 3, characterized in that the recessed part (24) is frustoconical, the knob having a frustoconical projection (14) of complementary shape to the said recessed part (24).

5. Lid according to one of Claims 1 to 4, characterized in that it also comprises a shoulder (25) extending between the recessed part (24) and the rest of the lid (1) and in that the knob (10) comprises a flat annular part (15) around the said portion of complementary shape (14), the joining means (11, 21) being integral with the flat annular portion (15) and with the shoulder (25), in such a way that when the knob (10) is removed from the lid (1), no part projects from the lid (1).

6. Lid according to one of Claims 1 to 5, characterized in that the joining means (11, 21) are positioned in the centre of the knob (10) and of the lid (1).

7. Lid according to one of Claims 1 to 6, characterized in that the pin (11) is integral with the knob (10), the slot (21) being integral with the lid (1) .

8. Lid according to Claim 7, characterized in that the slot (21) is formed in an insert (30), the insert (30) being fixed in an opening in the lid (1) and having a thickness greater than the thickness of the lid (1).

9. Lid according to Claim 8, characterized in that the insert (30) comprises a first pair of slots (21, 34) comprising locking portions (21b) that are upside-down within the thickness of the insert compared with the locking portions (34) of a second pair of slots, the two pairs of slots (21, 34) comprising common insertion portions (21a) so that the knob (10) can be fixed either to the top of the lid (1) or underneath it.

10. Knob for holding a lid according to one of Claims 1 to 9, characterized in that it comprises at least one pin (11) suitable for engaging in a slot (21) in the lid (1).
